# EUROPEAN PATENT SPECIFICATION

(11) **EP 0 807 917 B1**
(45) Date of publication and mention of the grant of the patent: **04.10.2001**
(21) Application number: 97303114.9
(22) Date of filing: 06.05.1997
(51) Int. Cl.: G09F 13/04, G09F 13/14

(54) **Apparatus for backlighting a display panel**
Gerät für die rückseitige Beleuchtung einer Anzeige
Dispositif d'illumination par l'arrière d'un panneau d'affichage

(30) Priority: 16.05.1996 GB 9610240
(43) Date of publication of application: 19.11.1997
(73) Proprietor: NCR INTERNATIONAL INC., Dayton, Ohio 45479 (US)
(72) Inventor: Stewart, Mark J., Dundee DD5 2EH (GB)
(74) Representative: Williamson, Brian

(56) References cited:
- EP-A- 0 081 603
- GB-A- 297 691
- GB-A- 2 056 740
- US-A- 4 997 263
- US-A- 5 416 495
- US-A- 5 739 876

## Description

The present invention relates to backlighting a display panel and is directed to using reflected sunlight to backlight a display panel of an automated teller machine (ATM).

Many types of display panels having viewable display screens are known. Some display panels, such as a liquid crystal display (LCD) panel, require backlighting to enable a person viewing the display screen of the display panel to see information appearing on the display screen. Typically, a light source, such as an energizable incandescent bulb, is located behind the LCD panel and, when energized, enables the person to view information appearing on the display screen of the LCD panel.

When the LCD panel is used in an environment which has bright sunlight, it may be difficult to read information appearing on the display screen since the light source behind the LCD panel may not be of sufficient intensity to contrast the brightness of the sunlight. However, the use of a light source of increased intensity is undesirable as the level of heat generated by the source and its power consumption will also increase. The generation of excessive heat may lead to an overheating condition.

GB-A-2 056 740 discloses an LCD panel for an automotive vehicle which uses incident sunlight to illuminate the panel under bright ambient conditions and an artificial light source in dark ambient conditions.
The artificial light source is selectively turned on and off and an illumination selection plate with diffusing reflector selectively collects ambient light or, when closed against the panel, reflects light from the artificial source, to illuminate the display.

GB-A-297 691 and EP-A-81603 disclose advertising displays which may be backlighted by natural ambient light or by artificial light depending on the ambient conditions.

US-A-4 997 263 describes an LCD system for mounting on an aircraft pilots' helmet for displaying navigational or strategic flight information in the field of vision of the pilot. The system uses an optical arrangement which is aligned so that ambient light from the direction of an observer's view is channelled behind the liquid crystal display to provide back illumination therefor. An illuminator is arranged to provide supplementary illumination for the liquid crystal display, as may be required. A photodetector determines when ambient light is inadequate for required display brightness and operates through appropriate control circuitry to turn the illuminator on or off, as the case may be.

US-A-5 416 495 discloses an electronic directory which embodies an LCD display unit which may be exposed to sunlight. The purpose of the arrangement disclosed is to hold the temperature of the display, notwithstanding ambient temperature and humidity variations, over generally normal ranges for at least the temperature zones, and even if the display unit receives direct sunlight. This is accomplished by the use of a shading hood, and an outwardly concave window which is mounted in front of the display and which reflects to a viewer only light from the hood underside.

It is an object of the present invention to provide a self service terminal with backlighting of a display panel in a sunny environment so as to alleviate the difficulties previously experienced in reading a display in such an environment.

The invention consists in a self-service terminal for allowing a customer to carry out a transaction comprising:
a card reader for receiving a customer identifying card from the customer and reading data from the card to verify the identity of the customer; and
a display panel having a back side and a front side for displaying information to be viewed by the customer while the customer is carrying out the transaction; characterised by window means for directing sunlight behind the display panel,
a reflector unit located in the vicinity of the back side of the display panel for receiving and reflecting sunlight; and
a lens system positioned between the back side of the display panel and the reflector unit for focusing reflected sunlight from the reflector unit towards the back side of the display panel to backlight the display panel and enable the customer to view the front side of the display panel while the customer is carrying out the transaction;
the reflector unit comprising a mirrored surface which receives and reflects the sunlight towards the lens system, the mirrored surface being parabolic.

An embodiment of the invention will now be described by way of example with reference to the accompanying drawings, in which:-
Fig. 1 is a perspective view of an automated teller machine (ATM) embodying a display panel system constructed in accordance with the present invention;
Fig. 2 is a block diagram representation of the ATM of Fig. 1; and
Fig. 3 is a schematic illustration of a sectional view taken approximately along line 3-3 of Fig. 1.

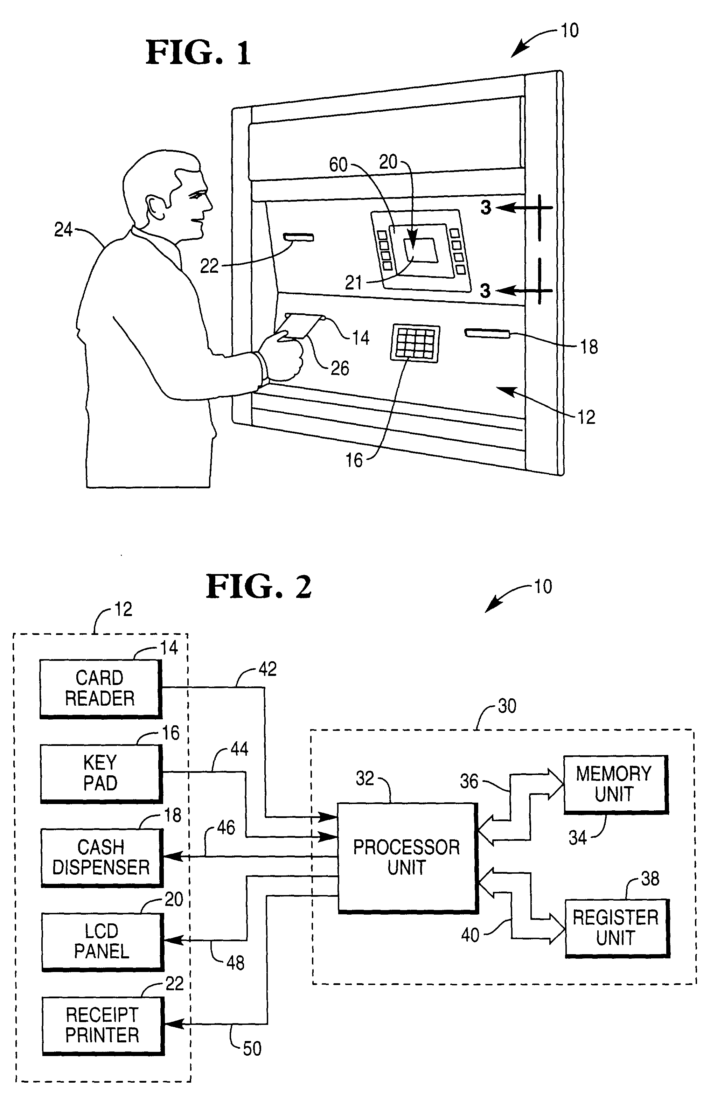

With reference to Fig. 1, an automated teller machine (ATM) 10 comprises a user interface in the form of a front panel 12. The front panel 12 includes a card reader 14, a key pad 16, a cash dispenser 18, a liquid crystal display (LCD) panel 20 having a display screen 21, and a receipt printer 22. Each of the card reader 14, the cash dispenser 18 and the receipt printer 22 have slots located on the front panel 12 of the ATM to allow insertion of a user's identifying card 26 at the commencement of a transaction and delivery of currency notes and a receipt to the customer 24 at the termination of a transaction, respectively.

When the customer 24 inserts the user's identifying card 26 into the slot of the card reader 14, data contained on the card is read. The customer 24 is then prompted on the display screen 21 of the LCD panel 20 to enter a personal identification number (PIN) via the key pad 16. After the correct PIN is entered, menus are displayed on the display screen 21 to enable the customer 24 to carry out the desired transaction. After the transaction is completed, currency may be dispensed through the slot of the cash dispenser 18 and the receipt printer 22 prints a receipt of the transaction and delivers the receipt through the slot of the receipt printer 22 to the customer 24.

Referring to Figs. 1 and 2, the ATM 10 further comprises a controller unit 30 which communicates with components of the front panel 12. The controller unit 30 includes a processor unit 32, a memory unit 34 connected via bus line 36 to the processor unit 32 and a register unit 38. The processor 32 receives input signals on lines 42, 44 from the card reader 14 and the key pad 16, respectively, and provides output signals on lines 46, 48, 50 to the cash dispenser 18, the LCD panel 20, and the receipt printer 22, respectively, to control the amount of cash dispensed by the cash dispenser 18, the information displayed on the display screen 21 of the LCD panel 20, and the information printed by the receipt printer 22. The processor unit 32 may include a microcomputer, and the memory unit 34 may be nonvolatile RAM. Suitable microcomputers and memories are readily available in the marketplace. Their structure and operation are well known and, therefore, will not be described.

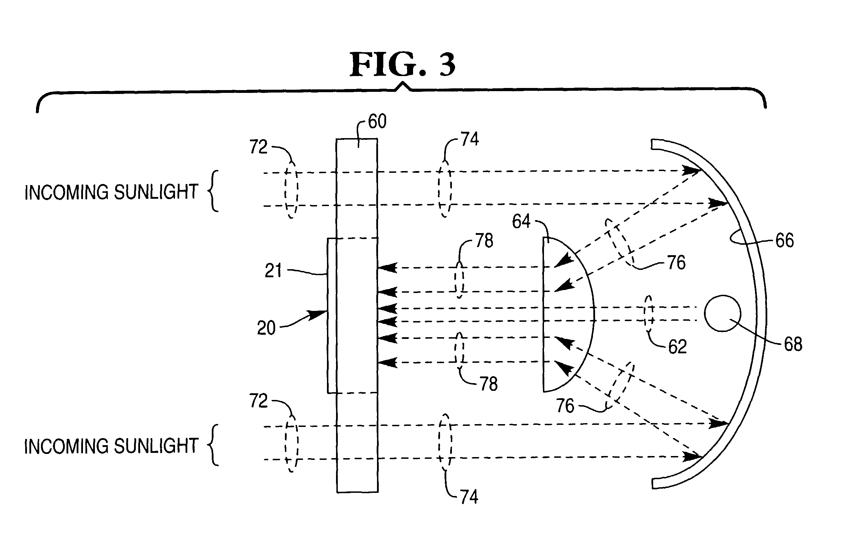

As shown in Figs. 1 and 3, a transparent non-reflective window 60 surrounds the outer periphery of the LCD panel 20. A lens system 64 is located behind the LCD panel 20 and a parabolic shaped mirrored surface 66 is located behind the lens system 64.

A light source 68 such as an incandescent bulb is located between the lens system 64 and the mirrored surface 66, as shown in Fig. 3. When energized, the light rays of light source 68 (represented by arrows 62 in Fig. 3) are directed towards the lens system 64 which focuses the light rays 62 and directs the focused light rays towards the back side of the LCD panel 20 to provide backlighting for the LCD panel 20.

In accordance with the present invention, incoming sunlight (represented by arrows 72 in Fig. 3) is transmitted through the transparent non-reflective window 60 surrounding the the LCD panel 20. The dimensions and position of the mirrored surface 66 behind the LCD panel 20 are such that the sunlight transmitted through the window 60 (represented by arrows 74 in Fig. 3) is received by the mirrored surface 66 and is reflected therefrom. The reflected rays of sunlight (represented by arrows 76 in Fig 3.) are directed towards the lens system 64 which focuses the reflected sunlight rays 76 and directs the focused light rays (represented by arrows 78 in Fig. 3) towards the back side of the LCD panel 20. It should be apparent that the focused light 78 directed towards the back side of the LCD panel 20 is a combination of light originating from the light source 68 and light originating from the incoming sunlight 72. The focused light originating from the incoming sunlight 72 supplements the light originating from the light source 68 to increase the backlighting intensity of the LCD panel 20 so as to enable the front side of the display panel to be viewed with improved contrast.

A number of advantages result from using incoming sunlight 72 to provide increased backlighting intensity for the LCD panel 20. For example, a light source 68 of increased intensity is not required in sunny conditions since light rays originating from the incoming sunlight 72 are used to supplement the light rays originating from the light source 68. Hence, the problems of increased power consumption and heat generation during operation of the increased intensity light source 68 are eliminated.

Although the foregoing describes a system in which the light source 68 is also used to provide backlighting for the LCD panel 20, it is conceivable that the light rays originating from the incoming sunlight 72 may provide sufficient backlighting for the LCD panel 20 such that the light source 68 may not always be required to be energized.

## Claims

1. A self-service terminal (10) for allowing a customer to carry out a transaction comprising:
a card reader (14) for receiving a customer identifying card (26) from the customer and reading data from the card to verify the identity of the customer; and
a display panel (20) having a back side and a front side for displaying information to be viewed by the customer while the customer is carrying out the transaction;
**characterised by**
window means (60) for directing sunlight (72) behind the display panel (20),
a reflector unit (66) located in the vicinity of the back side of the display panel (20) for receiving and reflecting sunlight; and
a lens system (64) positioned between the back side of the display panel and the reflector unit for focusing reflected sunlight from the reflector unit towards the back side of the display panel to backlight the display panel and enable the customer to view the front side of the display panel while the customer is carrying out the transaction;
the reflector unit comprising a mirrored surface (66) which receives and reflects the sunlight towards the lens system, the mirrored surface (66) being parabolic.

2. A self service terminal according to claim 1, **characterized in that** the display panel (20) is of the liquid crystal display (LCD) type.

3. A self service terminal according to claim 1 or 2, **characterized by** the transparent window (60) disposed about the periphery of the display panel and through which sunlight can impinge on the reflector unit (66).

4. A self service terminal according to claim 1, 2 or 3, **characterized by** a light source (68) located behind the display panel (20) for illuminating the back side of the display panel (20).

## Patentansprüche

1. Selbstbedienungsterminal (20), der einem Benutzer die Durchführung einer Transaktion erlaubt, mit
einem Kartenleser (14) zur Aufnahme einer Benutzeridentifizierungskarte (26) vom Benutzer und zum Lesen von Daten von der Karte zur Verifizierung der Identität des Benutzers, und
einem Displayfeld (20) mit einer Rückseite und einer Vorderseite zur Darstellung von Information, die der Benutzer sehen kann, während er die Transaktion durchführt,
**dadurch gekennzeichnet,**
**dass** hinter dem Displayfeld (20) ein Sonnenlicht (72) richtendes Fenster (60) angeordnet ist,
**dass** in der Nähe der Rückseite des Displayfeldes (20) eine Reflektoreinheit (66) angeordnet ist, auf welche das Sonnenlicht auftrifft und reflektiert wird,
**dass** zwischen der Rückseite des Displayfeldes und der Reflektoreinheit ein Linsensystem (64) angeordnet ist, welches das von der Reflektoreinheit reflektierte Sonnenlicht auf die Rückseite des Displayfeldes fokussiert, um das Displayfeld von hinten zu erleuchten, so dass der Benutzer die Frontseite des Displayfeldes bei der Durchführung seiner Transaktion beobachten kann,
und **dass** die Reflektoreinheit eine parabolische Spiegelfläche (66) aufweist, auf welche das Sonnenlicht auftrifft und zu dem Linsensystem reflektiert wird.

2. Selbstbedienungsterminal nach Anspruch 1, **dadurch gekennzeichnet, dass** das Displayfeld (20) vom Flüssigkristall-Displaytyp (LCD) ist.

3. Selbstbedienungsterminal nach Anspruch 1 oder 2, **dadurch gekennzeichnet, dass** das transparente Fenster (60) um den Umfang des Displayfeldes herum angeordnet ist und **dass** das durch es hindurchtretende Sonnenlicht auf die Reflektoreinheit (66) auftreffen kann.

4. Selbstbedienungsterminal nach Anspruch 1, 2 oder 3, **dadurch gekennzeichnet, dass** hinter dem Displayfeld (20) eine Lichtquelle (68) zur Beleuchtung der Rückseite des Displayfeldes (20) angeordnet ist.

## Revendications

1. Terminal (10) à service autonome pour permettre à un client d'effectuer une transaction comportant :
un lecteur (14) de carte pour recevoir une carte (26) d'identification de client du client et lire des données de la carte pour vérifier l'identité du client ; et
un panneau (20) d'affichage ayant un côté de fond et un côté avant pour afficher des informations destinées à être vues par le client tandis que le client effectue la transaction ; **caractérisé par**
des moyens (60) formant fenêtre destinés à diriger de la fumière (72) solaire derrière le panneau (20) d'affichage,
une unité (66) formant réflecteur située au voisinage du côté de fond du panneau (20) d'affichage pour recevoir et réfléchir de la lumière solaire ; et
un système (64) de lentilles positionné entre le côté de fond du panneau d'affichage et l'unité formant réflecteur pour focaliser de la lumière solaire réfléchie à partir de l'unité formant réflecteur en direction du côté de fond du panneau d'affichage pour donner un éclairage de fond au panneau d'affichage et permettre au client de voir le côté avant du panneau d'affichage tandis que le client effectue la transaction ;
l'unité formant réflecteur comportant une surface (66) à miroir qui reçoit et réfléchit la lumière solaire en direction du système de lentilles, la surface (66) à miroir étant parabolique.

2. Terminal à service autonome suivant la revendication 1, **caractérisé en ce que** le panneau (20) d'affichage est de type à affichage à cristaux liquides (LCD).

3. Terminal à service autonome suivant la revendication 1 ou 2, **caractérisé en ce que** la fenêtre (60) transparente est disposée autour de la périphérique du panneau d'affichage et de la lumière solaire peut tomber sur l'unité (66) formant réflecteur par l'intermédiaire de la fenêtre.

4. Terminal à service autonome suivant la revendication 1, 2 ou 3, **caractérisé par** une source (68) de lumière qui se trouve derrière le panneau (20) d'affichage pour illuminer le côté de fond ou arrière du panneau (20) d'affichage.
